# EUROPEAN PATENT APPLICATION

(11) **EP 4 712 412 A1**
(43) Date of publication of application: **18.03.2026**
(21) Application number: 24843405.2
(22) Date of filing: 10.07.2024
(51) Int. Cl.: H04L 9/40, H04W 12/041, H04W 12/40, H04W 8/24

(54) **METHOD AND APPARATUS FOR SUPPORTING SECURITY MECHANISMS HAVING DIFFERENT SECURITY LEVELS IN MOBILE COMMUNICATION SYSTEM**

(30) Priority: 14.07.2023 KR 20230091654
(71) Applicant: Samsung Electronics Co., Ltd., Suwon-si, Gyeonggi-do 16677 (KR)
(72) Inventor: LIM, Taehyung, Suwon-si, Gyeonggi-do 16677 (KR); CHOI, Hongjin, Suwon-si, Gyeonggi-do 16677 (KR)
(74) Representative: Gulde & Partner
(86) International application number: PCT/KR2024/009839
(87) International publication number: WO 2025/018686

(57) **Abstract**

The present disclosure relates to a method performed in a 5G or 6G communication system for supporting a higher data transmission rate, the method comprising the steps of: receiving, from a user equipment (UE), first information on specifying the UE; and transmitting, to a second network entity, second information related to an algorithm supported by the UE and a first network entity on the basis of the first information on specifying the UE, wherein the second information includes related to notify that the algorithm supported by the UE and the first network entity includes an algorithm with a high security level.

## Description

### [Technical Field]

The disclosure relates to a wireless communication system, and more particularly, to a method and device for interworking entities having different security levels when entities constituting a terminal and a network have different security levels in a process of mutual authentication and generation of a shared key to be used for secure communication in the wireless communication system.

### [Background Art]

5G mobile communication technology defines a wide frequency band to enable a fast transmission speed and new services, and may be implemented not only in a frequency ('sub 6 GHz') band of 6 GHz or less such as 3.5 GHz, but also in an ultra-high frequency band ('above 6 GHz') called a mmWave such as 28 GHz and 39 GHz. Further, in the case of 6G mobile communication technology, which is referred to as a beyond 5G system, in order to achieve a transmission speed that is 50 times faster than that of 5G mobile communication technology and ultra-low latency reduced to 1/10 compared to that of 5G mobile communication technology, implementations in terahertz bands (e.g., such as 95 GHz to 3 terahertz (3 THz) band) are being considered.

In the early days of 5G mobile communication technology, with the goal of satisfying the service support and performance requirements for an enhanced mobile broadband (eMBB), ultra-reliable low-latency communications (URLLC), and massive machine-type communications (mMTC), standardization has been carried out for beamforming and massive multi-input multi-output (MIMO) for mitigating a path loss of radio waves in an ultra-high frequency band and increasing a propagation distance of radio waves, support for various numerologies (multiple subcarrier spacing operation, and the like) for efficient use of ultra-high frequency resources and dynamic operation for slot formats, initial access technology for supporting multi-beam transmission and broadband, a definition and operation of a band-width part (BWP), a new channel coding method such as low density parity check (LDPC) code for large capacity data transmission and polar code for high reliable transmission of control information, L2 pre-processing, and network slicing that provides a dedicated network specialized for specific services.

Currently, discussions are ongoing to improve initial 5G mobile communication technology and enhance a performance thereof in consideration of services in which 5G mobile communication technology was intended to support, and physical layer standardization for technologies such as vehicle-to-everything (V2X) for helping driving determination of an autonomous vehicle and increasing user convenience based on a location and status information of the vehicle transmitted by the vehicle, new radio unlicensed (NR-U) for the purpose of a system operation that meets various regulatory requirements in unlicensed bands, NR UE power saving, a non-terrestrial network (NTN), which is direct UE-satellite communication for securing coverage in regions where communication with a terrestrial network is impossible, and positioning is in progress.

Further, standardization in the field of air interface architecture/protocol for technologies such as industrial Internet of things (IIoT) for supporting new services through linkage and convergence with other industries, integrated access and backhaul (IAB) that provides nodes for expanding network service regions by integrating wireless backhaul links and access links, mobility enhancement including conditional handover and dual active protocol stack (DAPS) handover, and 2-step RACH for NR that simplifies a random access procedure is also in progress, and standardization in the system architecture/service field for 5G baseline architecture (e.g., service based architecture, service based interface) for applying network functions virtualization (NFV) and software-defined networking (SDN) technologies, mobile edge computing (MEC) that receives services based on a location of a UE, and the like is also in progress.

When such a 5G mobile communication system is commercialized, connected devices in an explosive increase trend will be connected to communication networks; thus, it is expected that function and performance enhancement of a 5G mobile communication system and integrated operation of connected devices will be required. To this end, new research on eXtended reality (XR) for efficiently supporting augmented reality (AR), virtual reality (VR), mixed reality (MR), and the like, 5G performance improvement and complexity reduction using artificial intelligence (AI) and machine learning (ML), AI service support, metaverse service support, and drone communication will be conducted.

Further, the development of such a 5G mobile communication system will be the basis for the development of full duplex technology for improving frequency efficiency and system network of 6G mobile communication technology, satellite, artificial intelligence (AI)-based communication technology that utilizes AI from a design stage and that realizes system optimization by internalizing end-to-end AI support functions, and next generation distributed computing technology that realizes complex services beyond the limits of UE computing capabilities by utilizing ultra-high performance communication and computing resources as well as a new waveform for ensuring coverage in a terahertz band of 6G mobile communication technology, full dimensional MIMO (FD-MIMO), multi-antenna transmission technologies such as an array antenna and large scale antenna, metamaterial-based lenses and antennas for improving coverage of terahertz band signals, high-dimensional spatial multiplexing technology using orbital angular momentum (OAM), and reconfigurable intelligent surface (RIS) technology.

### [Disclosure of Invention]

### [Technical Problem]

Based on the foregoing discussion, an objective of the disclosure is to solve the following problems. In a wireless communication system, when a terminal and a network perform mutual authentication and generate a shared key to be used for subsequent secure communication, entities constituting the terminal and the network may have different security levels. In this case, existing methods have been designed without considering situations in which these entities have different security levels, which may lead to problems. Accordingly, the disclosure is directed to solving the above-described problems.

### [Solution to Problem]

According to the disclosure for solving the above problems, a method performed by a first network entity in a wireless communication system may include receiving, from a user equipment (UE), first information on specifying the UE; and transmitting, to a second network entity, second information related to algorithms supported by the UE and the first network entity based on the first information on specifying the UE, wherein the second information may be related to notify that the algorithms supported by the UE and the first network entity include an algorithm with a high security level.

In an embodiment, the first information may be associated with an encryption algorithm supported by the UE.

In an embodiment, the method may further include receiving, from the second network entity, third information on deriving a high-security-level encryption key related to an authentication and a shared key generation.

In an embodiment, in the case that the third information is received, the method may further include transmitting all or part of the third information to the UE, wherein the UE may include a subscriber identity module (SIM) and a mobile equipment (ME), and the all or part of the third information may be transmitted from the ME to the SIM.

Further, in another embodiment of the disclosure, a method performed by a second network entity in a wireless communication system may include receiving, from a first network entity, second information related to algorithms supported by the UE and the first network entity based on first information on specifying the UE, wherein the first information on specifying the UE may be transmitted from the UE to the first network entity, and the second information may be related to notify that the algorithms supported by the UE and the first network entity include an algorithm with a high security level.

Further, in another embodiment of the disclosure, a first network entity in a wireless communication system may include a transceiver capable of transmitting and receiving at least one signal; and a controller coupled with the transceiver, wherein the controller may be configured to receive, from a user equipment (UE), first information on specifying the UE, and transmit, to a second network entity, second information related to algorithms supported by the UE and the first network entity based on the first information on specifying the UE, wherein the second information may be related to notify that the algorithms supported by the UE and the first network entity include an algorithm with a high security level.

Further, in another embodiment of the disclosure, a second network entity in a wireless communication system may include a transceiver capable of transmitting and receiving at least one signal; and a controller coupled with the transceiver, wherein the controller may be configured to receive, from a first network entity, second information related to algorithms supported by the UE and the first network entity based on first information on specifying the UE, wherein the first information on specifying the UE may be transmitted from the UE to the first network entity, and the second information may be related to notify that the algorithms supported by the UE and the first network entity include an algorithm with a high security level.

### [Advantageous Effects of Invention]

Various embodiments of the disclosure can provide a device and method capable of effectively providing a service in a wireless communication system.

Effects that may be obtained from the disclosure are not limited to the effects mentioned in various embodiments, and other effects that are not mentioned may be clearly understood by those skilled in the art to which the disclosure belongs from the description below.

### [Brief Description of Drawings]

FIG. 1A is a diagram illustrating a communication network including core network entities in a wireless communication system according to various embodiments of the disclosure.
FIG. 1B is a diagram illustrating a wireless environment including a core network in a wireless communication system according to various embodiments of the disclosure.
FIG. 2A is a block diagram illustrating an example of a functional structure of a terminal according to embodiments of the disclosure.
FIG. 2B is a block diagram illustrating an example of a functional structure of a base station according to embodiments of the disclosure.
FIG. 2C is a block diagram illustrating an example of a functional structure of a core network entity according to embodiments of the disclosure.
FIG. 3 is a diagram illustrating a hierarchical structure of encryption keys generated by a terminal and a network for secure communication according to an embodiment of the disclosure.
FIG. 4 is a message flow diagram illustrating an authentication process of a terminal and a network, and a shared key generation process for secure communication according to an embodiment of the disclosure.
FIG. 5 is a message flow diagram illustrating an authentication process of a terminal and a network that may have different security levels, and a shared key generation process for secure communication according to an embodiment of the disclosure.
FIG. 6 is a message flow diagram illustrating an authentication process between a terminal and a network that may have different security levels, and a shared key generation process for secure communication according to another embodiment of the disclosure.

### [Mode for the Invention]

The terms used in the disclosure are merely intended to describe specific embodiments and may not be intended to limit the scope of other embodiments. The singular expression may include plural expressions unless the context clearly indicates otherwise. Terms used herein, including technical or scientific terms, may have the same meaning as commonly understood by those skilled in the art to which the disclosure pertains. Terms defined in general dictionaries among the terms used in the disclosure may be interpreted as having the same or similar meaning in the context of the relevant technology, and shall not be interpreted in an idealized or overly formal sense unless explicitly defined in the disclosure. In some cases, even terms defined in the disclosure shall not be construed as excluding embodiments of the disclosure.

In various embodiments of the disclosure described below, a hardware-based approach is illustrated as an example. However, because the various embodiments of the disclosure include techniques that utilize both hardware and software, the various embodiments of the disclosure are not intended to exclude software-based approaches.

The 3rd generation partnership project (3GPP), which is responsible for standardizing cellular mobile communication systems, is standardizing a new core network architecture, referred to as the 5G core (5GC), in order to enable the evolution from existing 4G LTE systems to 5G systems. Compared to the evolved packet core (EPC), which serves as the network core for existing 4G systems, the 5GC supports the following differentiated functions.

First, the 5GC introduces a network slicing function. As one of requirements of 5G, the 5GC should support various types of terminals and services (e.g., eMBB, URLLC, or mMTC services). Different types of services have different requirements for the core network. For example, eMBB services require high data rates, while URLLC services require high reliability and low latency. One of technologies proposed to meet these diverse service requirements is network slicing.

Network slicing is a method of creating multiple logical networks by virtualizing a single physical network, and each network slice instance (NSI) may have different characteristics. Therefore, each NSI may satisfy various service requirements by including network functions (NFs) tailored to its characteristics. When an NSI suitable for characteristics of a service required by each terminal is allocated, multiple 5G services may be efficiently supported.

Second, the 5GC may facilitate support for the network virtualization paradigm by separating the mobility management function and the session management function. In 4G long term evolution (LTE), services were provided through signaling exchanges with a single core entity called the mobility management entity (MME), which was responsible for registration, authentication, mobility management, and session management for all terminals. However, in 5G, as the number of terminals increases explosively and the mobility and traffic/session characteristics to be supported become more diversified depending on terminal types, supporting all functions in a single entity such as the MME inevitably leads to limited scalability, because additional entities need to be added for each required function. Therefore, to improve scalability in terms of functional/implementation complexity and signaling load of the core entity responsible for the control plane, various functions are being developed based on a structure that separates the mobility management and session management functions.

Hereinafter, various embodiments will be described in detail with reference to the accompanying drawings. Further, in describing embodiments of the disclosure, in the case that it is determined that a detailed description of a related known function or constitution may unnecessarily obscure the subject matter of the embodiments, a detailed description thereof will be omitted. Terms described below are terms defined in consideration of functions in the embodiments, which may vary according to intentions or customs of users and operators. Therefore, the definition should be made based on the content throughout this specification.

For the same reason, some components are exaggerated, omitted, or schematically illustrated in the accompanying drawings. Further, the size of each component does not fully reflect the actual size. In each drawing, the same reference numerals are given to the same or corresponding components.

Advantages and features of the disclosure, and a method of achieving them will become apparent with reference to the embodiments described below in detail in conjunction with the accompanying drawings. However, the disclosure is not limited to the embodiments disclosed below, but may be implemented in various different forms, and only these embodiments enable the disclosure to be complete, and are provided to fully inform the scope of the disclosure to those skilled in the art to which the disclosure pertains, and the disclosure is only defined by the scope of the claims. Like reference numerals refer to like components throughout the specification.

In this case, it will be understood that each block of message flow diagrams and combinations of the message flow diagrams may be performed by computer program instructions. Because these computer program instructions may be mounted in a processor of a general purpose computer, special purpose computer, or other programmable data processing equipment, the instructions performed by a processor of a computer or other programmable data processing equipment generate a means that performs functions described in the message flow diagram block(s). Because these computer program instructions may be stored in a computer usable or computer readable memory that may direct a computer or other programmable data processing equipment in order to implement a function in a particular manner, the instructions stored in the computer usable or computer readable memory may produce a production article containing instruction means for performing the function described in the message flow diagram block(s). Because the computer program instructions may be mounted on a computer or other programmable data processing equipment, a series of operation steps are performed on the computer or other programmable data processing equipment to generate a computer-executable process; thus, instructions for performing the computer or other programmable data processing equipment may provide steps for performing functions described in the message flow diagram block(s).

Further, each block may represent a portion of a module, a segment, or a code including one or more executable instructions for executing specified logical function(s). Further, it should be noted that in some alternative implementations, functions recited in the blocks may occur out of order. For example, two blocks illustrated one after another may in fact be performed substantially simultaneously, or the blocks may be sometimes performed in the reverse order according to the corresponding function.

In this case, a term '-unit' used in various embodiments of the disclosure means software or hardware components such as a field programmable gate array (FPGA) or an application specific integrated circuit (ASIC), and '-unit' may perform certain roles. However, '-unit' is not limited to software or hardware. '-unit' may be constituted to reside in an addressable storage medium or may be constituted to reproduce one or more processors. Therefore, as an example, '-unit' may include components such as software components, object-oriented software components, class components, and task components, processes, functions, properties, procedures, subroutines, segments of program code, drivers, firmware, microcode, circuit, data, databases, data structures, tables, arrays, and variables. Functions provided in the components and '-units' may be combined into a smaller number of components and '-units' or may be further separated into additional components and '-units'. Further, components and '-units' may be implemented to reproduce one or more CPUs in a device or secure multimedia card.

Hereinafter, the base station, as an entity that performs resource allocation for a terminal, may be at least one of an eNode B (eNB), a Node B, a base station (BS), a radio access network (RAN), an access network (AN), a RAN node, a NR NB, a gNB, a wireless access unit, a base station controller, or a node on a network. The terminal may include a user equipment (UE), a mobile station (MS), a cellular phone, a smartphone, a computer, or a multimedia system capable of performing communication functions. In various embodiments of the disclosure, a case where the terminal is a UE will be described as an example. Further, although various embodiments of the disclosure are described below using a system based on LTE, LTE-A, or NR as an example, various embodiments of the disclosure may also be applied to other communication systems having similar technical backgrounds or channel types. Further, various embodiments of the disclosure may be applied to other communication systems with some modifications that do not substantially depart from the scope of the disclosure, as will be understood by those skilled in the art.

In the following description, terms for identifying connection nodes, terms referring to network entities, terms referring to messages, terms referring to interfaces between network entities, terms referring to various identification information, and the like are provided merely as examples for convenience of description. Accordingly, the disclosure is not limited to the terms described below, and other terms referring to objects having equivalent technical meanings may be used.

Further, although the disclosure describes various embodiments using terms used in certain communication standards (e.g., 3rd generation partnership project (3GPP)), this is merely for illustrative purposes. Various embodiments of the disclosure may be easily modified and applied to other communication systems. Hereinafter, some terms used in the core network of the disclosure are defined in advance.

- AMF: Access and Mobility Management Function
- CN: Core Network
- CNF: Containerized Network Function
- DNN: Data Network Name
- PCF: Policy Control Function
- HSS: Home Subscriber Server
- SMF: Session Management Function
- UDM: User Data Management
- UPF: User Plane Function
- CNF: Containerized Network Function
- VNF: Virtual Network Function

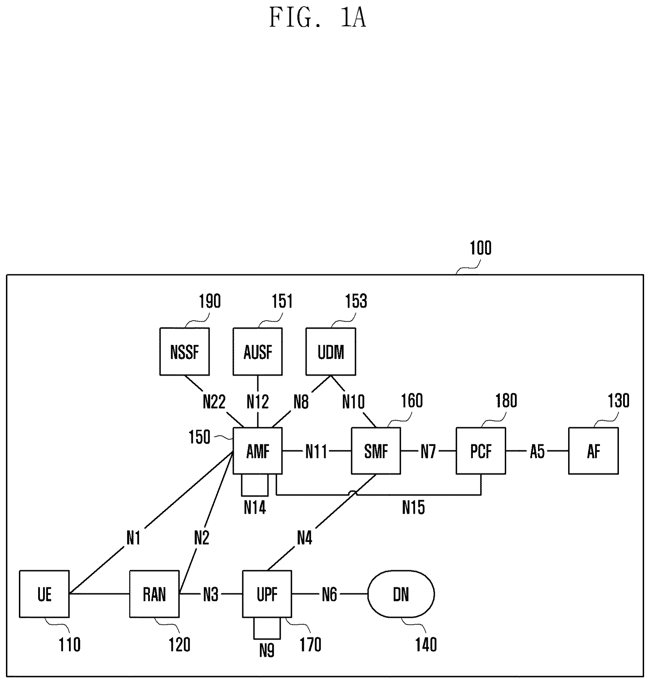

FIG. 1A is a diagram illustrating a communication network including core network entities in a wireless communication system according to embodiments of the disclosure. A 5G mobile communication network may include a 5G user equipment (UE) 110, a 5G radio access network (RAN) 120, and a 5G core network.

The 5G core network may include network functions such as an access and mobility management function (AMF) 150 that provides a mobility management function of the UE, a session management function (SMF) 160 that provides a session management function, a user plane function (UPF) 170 that performs a data transfer role, a policy control function (PCF) 180 that provides a policy control function, a unified data management (UDM) 153 that provides a data management function such as subscriber data and policy control data, or a unified data repository (UDR) that stores data of various network functions.

With reference to FIG. 1A, the UE 110 may perform communication through a wireless channel, i.e., an access network formed with a base station (e.g., eNB, gNB). In some embodiments, the UE 110 may be a device used by a user and configured to provide a user interface (UI). As an example, the UE 110 may be a UE equipped on a vehicle for driving. In some other embodiments, the UE 110 may be a device that performs machine type communication (MTC) operated without user intervention, or may be an autonomous vehicle. The UE may also be referred to as a 'terminal', 'vehicle terminal', 'user equipment (UE)', 'mobile station', 'subscriber station', 'remote terminal', 'wireless terminal', 'user device', or other terms having equivalent technical meanings. As a terminal device, in addition to the UE, a customer premises equipment (CPE) or a dongle-type terminal may be used. The CPE may be connected to an NG-RAN node like the UE and provide a network to other communication equipment (e.g., laptop).

With reference to FIG. 1A, the AMF 150 may provide access and mobility management functions for each UE 110, and each UE 110 may basically be connected to a single AMF 150. Specifically, the AMF 150 may perform at least one function of signaling between core network nodes for mobility between 3GPP access networks, an interface (N2 interface) between wireless access networks (e.g., 5G RAN) 120, NAS signaling with the UE 110, identification of the SMF 160, or provision of transmission of session management (SM) messages between the UE 110 and the SMF 160. Some or all of functions of the AMF 150 may be supported within a single instance of one AMF 150.

With reference to FIG. 1A, the SMF 160 may provide a session management function, and in the case that the UE 110 has multiple sessions, each session may be managed by a different SMF 160. Specifically, the SMF 160 may perform at least one function of session management (e.g., session establishment, modification, and release, including maintenance of tunnels between the UPF 170 and the access network node), selection and control of user plane (UP) functions, configuration of traffic steering for routing traffic to an appropriate destination in the UPF 170, termination of the SM part of NAS messages, downlink data notification (DDN), or initiation of AN-specific SM information (e.g., transfer to the access network via the N2 interface through the AMF 150). Some or all of the functions of the SMF 160 may be supported within a single instance of one SMF 160.

In the 3GPP system, conceptual links connecting NFs within a 5G system may be referred to as reference points. Reference points may also be referred to as interfaces. The following exemplifies reference points (hereafter, interchangeably referred to as interfaces) included in the 5G system architecture represented across various embodiments of the disclosure.
- N1: Reference point between the UE 110 and the AMF 150
- N2: Reference point between the (R)AN 120 and the AMF150
- N3: Reference point between the (R)AN 120 and the UPF170
- N4: Reference point between the SMF 160 and the UPF 170
- N5: Reference point between the PCF 180 and the AF 130
- N6: Reference point between the UPF 170 and the DN 140
- N7: Reference point between the SMF 160 and the PCF 180
- N8: Reference point between the UDM 153 and the AMF 150
- N9: Reference point between two core UPFs 170
- N10: Reference point between the UDM 153 and the SMF 160
- N11: Reference point between the AMF 150 and the SMF 160
- N12: Reference point between the AMF 150 and an authentication server function (AUSF) 151
- N13: Reference point between the UDM 153 and the AUSF 151
- N14: Reference point between two AMFs 150
- N15: In the case of non-roaming scenarios, a reference point between the PCF 180 and the AMF 150, and in the case of roaming scenarios, a reference point between the PCF 180 and the AMF 150 within a visited network.

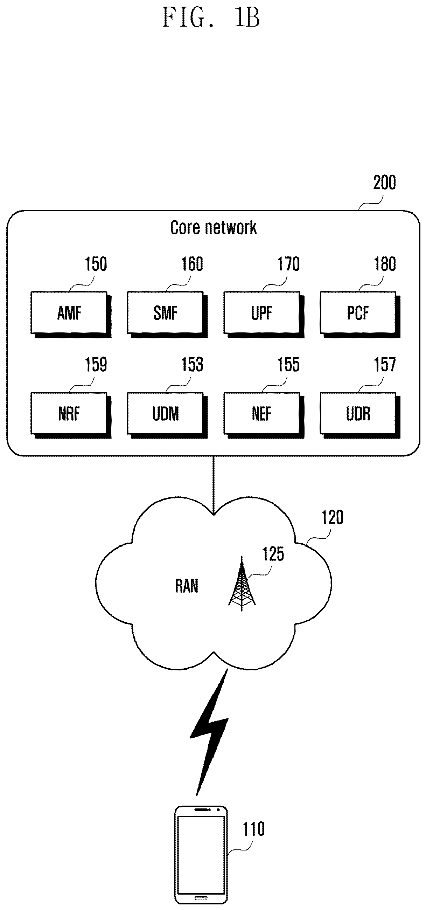

FIG. 1B is a diagram illustrating a wireless environment including a core network in a wireless communication system according to embodiments of the disclosure. With reference to FIG. 1B, the wireless communication system includes a radio access network (RAN) 120 and a core network (CN).

The RAN 120 is a network directly connected to a user device, for example, the UE 110, and serves as an infrastructure providing wireless access to the UE 110. The RAN 120 includes a set of a plurality of base stations including a base station 125, and the plurality of base stations may communicate with each other through interfaces formed therebetween. At least some of the interfaces between the plurality of base stations may be wired or wireless. The base station 125 may have a structure divided into a central unit (CU) and a distributed unit (DU). In this case, one CU may control a plurality of DUs. In addition to the term "base station", the base station 125 may also be referred to as an 'access point (AP)', 'next generation node B (gNB)', '5th generation node (5G node)', 'wireless point', 'transmission/reception point (TRP)', or other terms having an equivalent technical meaning. The UE 110 accesses to the RAN 120 and communicates with the base station 125 through a wireless channel. In addition to the term "terminal", the UE 110 may be referred to as a 'user equipment (UE)', a 'mobile station', a 'subscriber station', a 'remote terminal', a 'wireless terminal', a 'user device', or other terms having equivalent technical meanings.

The core network is a network that manages an entire system, controls the RAN 120, and processes data and control signals for the UE 110 transmitted and received through the RAN 120. The core network performs various functions such as control of the user plane and control plane, mobility management, subscriber information management, charging, and interworking with other types of systems (e.g., long term evolution (LTE) system). In order to perform the various functions described above, the core network may include a plurality of functionally separated entities having different network functions (NFs). For example, a core network 200 may include an access and mobility management function (AMF) 150, a session management function (SMF) 160, a user plane function (UPF) 170, a policy and charging function (PCF) 180, a network repository function (NRF) 159, a unified data management (UDM) 153, a network exposure function (NEF) 155, and a unified data repository (UDR) 157.

The UE 110 is connected to the RAN 120 and accesses the AMF 150 that performs a mobility management function of the core network. The AMF 150 is a function or entity responsible for both access to the RAN 120 and mobility management of the UE 110. The SMF 160 is an NF that manages sessions. The AMF 150 is connected to the SMF 160 and routes session-related messages for the UE 110 to the SMF 160. The SMF 160 is connected to the UPF 170 to allocate user plane resources to be provided to the UE 110, and establishes a tunnel for transmitting data between the base station 125 and the UPF 170. The PCF 180 controls information related to policy and charging for sessions used by the UE 110.

The NRF 159 performs functions of storing information on NFs installed in a mobile communication operator network and notifying the stored information. The NRF 159 may be connected to all NFs. When each NF starts operating in the operator network, it registers with the NRF 159 to notify the NRF 159 that the corresponding NF is operating within the network. The UDM 153 is an NF that performs a role similar to that of a home subscriber server (HSS) in a 4G network, and stores subscription information of the UE 110 or a context used by the UE 110 within the network.

The NEF 155 serves to connect a third-party server and NFs within the 5G mobile communication system. Further, the NEF 155 performs functions of providing data to, updating, or acquiring data from the UDR 157. The UDR 157 performs functions of storing subscription information of the UE 110, policy information, data exposed to external entities, or information required by third-party applications. Further, the UDR 157 performs a function of providing the stored data to other NFs.

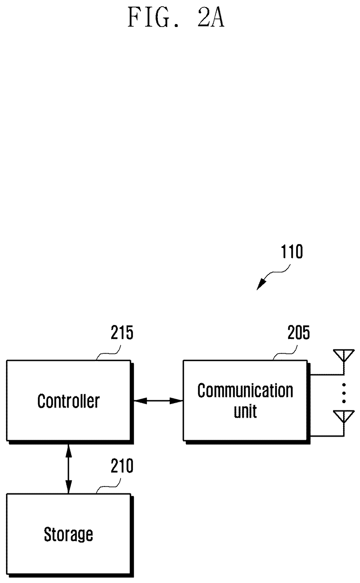

FIG. 2A is a block diagram illustrating an example of a functional structure of a UE according to embodiments of the disclosure. The constitution illustrated in FIG. 2A may be understood as the constitution of the UE 110. Terms such as ''... unit" and "... device" used hereinafter mean a unit that processes at least one function or operation, which may be implemented by hardware, software, or a combination of hardware and software.

With reference to FIG. 2A, the UE includes a communication unit 205, a storage 210, and a controller 215.

The communication unit 205 performs functions for transmitting and receiving signals through a wireless channel. For example, the communication unit 205 performs a conversion function between a baseband signal and a bit stream according to the physical layer specifications of the system. For example, when transmitting data, the communication unit 205 generates complex symbols by encoding and modulating a transmission bit stream. Further, when receiving data, the communication unit 205 restores a reception bit stream by demodulating and decoding the baseband signal. Further, the communication unit 205 up-converts a baseband signal into an RF band signal and then transmits it through an antenna, and down-converts an RF band signal received through the antenna into a baseband signal. For example, the communication unit 205 may include a transmission filter, a reception filter, an amplifier, a mixer, an oscillator, a digital to analog convertor (DAC), an analog to digital convertor (ADC), and the like.

Further, the communication unit 205 may include a plurality of transmission and reception paths. Furthermore, the communication unit 205 may include at least one antenna array composed of a plurality of antenna elements. In terms of hardware, the communication unit 205 may be composed of digital circuits and analog circuits (e.g., radio frequency integrated circuits (RFIC)). Here, the digital circuits and analog circuits may be implemented in a single package. Further, the communication unit 205 may include a plurality of RF chains. Furthermore, the communication unit 205 may perform beamforming.

The communication unit 205 transmits and receives signals, as described above. Accordingly, all or part of the communication unit 205 may be referred to as a 'transmitter', a 'receiver', or a 'transceiver'. Further, in the following description, the term "transmission and reception performed through a wireless channel" is used to include that the processing as described above is performed by the communication unit 205.

The storage 210 stores data such as basic programs, application programs, and configuration information for the operation of the UE. The storage 210 may be composed of a volatile memory, a non-volatile memory, or a combination of a volatile memory and a non-volatile memory. Further, the storage 210 provides stored data according to the request from the controller 215.

The controller 215 controls the overall operations of the UE. For example, the controller 215 transmits and receives signals through the communication unit 205. Further, the controller 215 records and reads data in the storage 210. Further, the controller 215 may perform functions of the protocol stack required by the communication standard. To this end, the controller 215 may include at least a processor or microprocessor, or may be a part of a processor. Further, a part of the communication unit 205 and the controller 215 may be referred to as a communication processor (CP). According to various embodiments, the controller 215 may control to perform synchronization using a wireless communication network. For example, the controller 215 may control the UE to perform operations according to various embodiments described below.

According to various embodiments of the disclosure, a terminal may be composed of a mobile equipment (ME) and a universal mobile telecommunications service (UMTS) subscriber identity module (USIM). The ME may include a mobile terminal (MT) and a terminal equipment (TE). The MT may be a part in which a wireless access protocol operates, and the TE may be a part in which a control function operates. For example, in the case of a wireless communication terminal (e.g., mobile phone), the MT and the TE may be integrated, and in the case of a laptop computer, the MT and the TE may be separated. In the disclosure, according to the operation of each component, the ME and the USIM may be represented as distinct entities, but the disclosure is not limited thereto, and various embodiments of the disclosure may be described by expressing the terminal (e.g., UE) including the ME and the USIM, or by expressing the ME as the terminal.

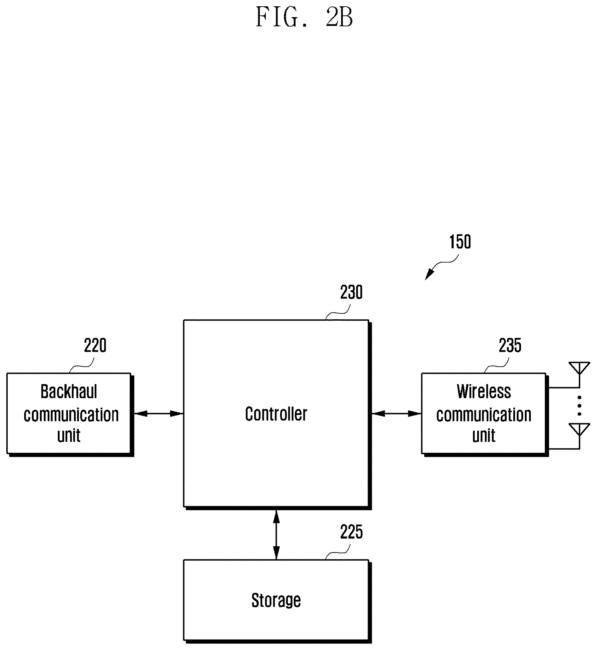

FIG. 2B is a block diagram illustrating an example of a functional structure of a base station according to embodiments of the disclosure. The constitution illustrated in FIG. 2B may be understood as the constitution of the base station 120. Terms such as "... unit" and "... device" used hereinafter mean a unit that processes at least one function or operation, which may be implemented by hardware, software, or a combination of hardware and software.

With reference to FIG. 2B, the base station includes a wireless communication unit 235, a backhaul communication unit 220, a storage 225, and a controller 230.

The wireless communication unit 235 performs functions for transmitting and receiving signals via a wireless channel. For example, the wireless communication unit 235 performs a conversion function between baseband signals and bit streams according to the physical layer specifications of the system. For example, when transmitting data, the wireless communication unit 235 encodes and modulates the transmitted bit stream to generate complex symbols. Further, when receiving data, the wireless communication unit 235 restores the received bit stream by demodulating and decoding the baseband signal.

Further, the wireless communication unit 235 up-converts a baseband signal into a radio frequency (RF) band signal and transmits it through an antenna, and down-converts an RF band signal received through the antenna into a baseband signal. To this end, the wireless communication unit 235 may include a transmission filter, a reception filter, an amplifier, a mixer, an oscillator, a digital to analog convertor (DAC), an analog to digital convertor (ADC), and the like. Further, the wireless communication unit 235 may include a plurality of transmission and reception paths. Furthermore, the wireless communication unit 235 may include at least one antenna array composed of a plurality of antenna elements.

In terms of hardware, the wireless communication unit 235 may be composed of a digital unit and an analog unit, and the analog unit may be composed of a plurality of sub-units according to operating power, operating frequency, and the like. The digital unit may be implemented by at least one processor (e.g., digital signal processor (DSP)).

The wireless communication unit 235 transmits and receives signals, as described above. Accordingly, all or part of the wireless communication unit 235 may be referred to as a 'transmitter', a ' receiver', or a 'transceiver'. Further, in the following description, the term "transmission and reception performed through a wireless channel" is used to include that the processing described above is performed by the wireless communication unit 235.

The backhaul communication unit 220 provides an interface for performing communication with other nodes within the network. That is, the backhaul communication unit 220 converts a bit stream transmitted from a base station to another node, such as another access node, another base station, an upper node, and a core network into a physical signal, and converts a physical signal received from another node into a bit stream.

The storage 225 stores data such as basic programs, application programs, and configuration information for operating the base station. The storage 225 may be composed of a volatile memory, a nonvolatile memory, or a combination of a volatile memory and a nonvolatile memory. Further, the storage 225 provides stored data according to the request from the controller 230.

The controller 230 controls the overall operations of the base station. For example, the controller 230 transmits and receives signals through the wireless communication unit 235 or the backhaul communication unit 220. Further, the controller 230 records and reads data in the storage 225. Further, the controller 230 may perform functions of a protocol stack required by a communication standard. According to another implementation example, the protocol stack may be included in the wireless communication unit 235. For this purpose, the controller 230 may include at least one processor. According to various embodiments, the controller 230 may control to perform synchronization using a wireless communication network. For example, the controller 230 may control the base station to perform operations according to various embodiments described below.

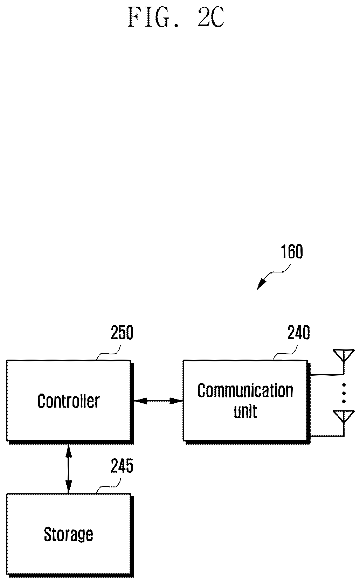

FIG. 2C is a block diagram illustrating an example of a functional structure of a core network entity according to embodiments of the disclosure. FIG. 2C illustrates a constitution of a core network entity in a wireless communication system according to various embodiments of the disclosure. The constitution illustrated in FIG. 2C may be understood as a constitution of a device having the function of at least one of the network entities including the AMF 150 of FIG. 1. Terms such as "... unit" and "... device" used hereinafter mean a unit that processes at least one function or operation, and this may be implemented by hardware, software, or a combination of hardware and software.

With reference to FIG. 2C, the core network entity includes a communication unit 240, a storage 245, and a controller 250.

The communication unit 240 provides an interface for performing communication with other devices within the network. That is, the communication unit 240 converts a bit stream transmitted from a core network entity to another device into a physical signal, and converts a physical signal received from another device into a bit stream. That is, the communication unit 240 may transmit and receive signals. Accordingly, the communication unit 240 may be referred to as a modem, a transmitter, a receiver, or a transceiver. In this case, the communication unit 240 enables the core network entity to communicate with other devices or systems via a backhaul connection (e.g., wired backhaul or wireless backhaul) or via a network.

The storage 245 stores data such as basic programs, application programs, and configuration information for operating the core network entity. The storage 245 may be composed of a volatile memory, a non-volatile memory, or a combination of a volatile memory and a non-volatile memory. Further, the storage 245 provides the stored data according to the request from the controller 250.

The controller 250 controls the overall operations of the core network entity. For example, the controller 250 transmits and receives signals through the communication unit 240. Further, the controller 250 records and reads data in the storage 245. For this purpose, the controller 250 may include at least one processor. According to various embodiments of the disclosure, the controller 250 may control to perform synchronization using a wireless communication network. For example, the controller 250 may control the core network entity to perform operations according to various embodiments described below.

In the following description, terms for identifying connection nodes, terms referring to network entities, terms referring to messages, terms referring to interfaces between network entities, terms referring to various identification information, and the like are provided merely as examples for convenience of description. Accordingly, the disclosure is not limited to the terms described below, and other terms referring to objects having equivalent technical meanings may be used.

Hereinafter, for convenience of description, the disclosure uses terms and names defined in 5G system (5GS) and new radio (NR) standards, which are the latest standards defined by the 3rd generation partnership project (3GPP) organization among currently existing communication standards. However, the disclosure is not limited by the terms and names, and may be equally applied to a wireless communication network conforming to other standards. In particular, the disclosure may be applied to 3GPP 5G mobile communication standards (e.g., 5GS and NR).

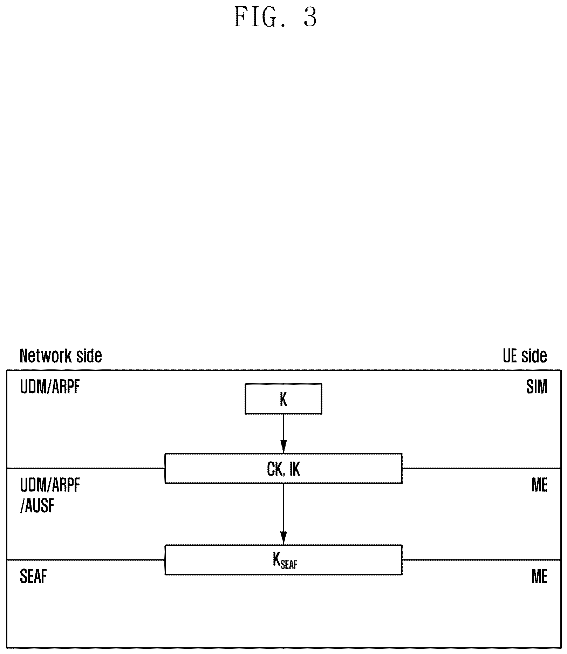

FIG 3 is a diagram illustrating a hierarchical structure of encryption keys generated by a UE and a network for secure communication according to an embodiment of the disclosure.

An encryption key actually used by the UE and the network for communication is an encryption key derived through several steps based on a root key pre-stored in both entities.

The reason why the root key shared between the UE and the network is not used directly, but instead a new key is derived for communication, is as follows. The root key shared between the UE and the network is security information stored in the SIM on the UE side, and security information stored in the UDM/ARF on the network side, and it remains unchanged until the SIM is replaced. In other words, authentication between the UE and the network occurs multiple times while the SIM is in use, and the root key remains unchanged during this process. Therefore, in the case where the root key value is used as an encryption key for communication, the key value for secure communication remains unchanged, thereby weakening the level of security. To increase the security level, a new encryption key should be generated each time authentication is performed and this new generated key should be used for communication. For this reason, the UE and the network do not use the pre-stored root key value directly as a key for encrypted communication, but derive a new key using the root key value. Such a process may be achieved by deriving a new encryption key using the root key value and a random value (hereinafter, referred to as RAND) that varies with each authentication. Simply put, the 'root key' and 'RAND' may be used as materials for deriving the encryption key that the UE and network will actually use for secure communication after authentication, and accordingly, the encryption key may differ for each authentication.

However, the above derivation process may be performed in multiple stages rather than in a single step. In other words, it may be performed through multiple layers. The reason for such a multi-stage process is as follows. The UE is composed of a SIM and an ME, and the network is composed of various entities such as the UDM, ARPF, AUSF, and SEAF. Each entity has a different security level and role, and their roles in the process of deriving encryption keys are also different. Therefore, because the encryption key should be generated through cooperation among multiple entities, the process of deriving the encryption key is performed in multiple stages, and keys generated thereby have a hierarchical structure.

As described above, FIG. 3 is a diagram illustrating the hierarchy of the keys described above. A detailed description thereof is provided below.

First, a description is made from the perspective of the UE.
- The UE may be composed of an SIM and a ME.
- The SIM may have the root key value described above. The root key may be referred to as K.
- The SIM may derive encryption key values called CK and IK using the K value and the RAND value described above.
- The SIM may transmit the CK and IK to the ME.
- The ME may generate an encryption key value called K_SEAF using the received CK and IK values.

Next, a description is made from the perspective of the network.
- The network may be composed of the UDM, ARPF, AUSF and SEAF.
- The SEAF may be a logical entity or function provided by the AMF for security purposes.
- The UDM/ARPF may have the root key value K described above.
- The UDM/ARPF may derive encryption key values called CK and IK using the K value and the RAND value described above.
- The UDM/ARPF may transmit the CK and IK values to the UDM/ARPF/AUSF.
- The UDM/ARPF/AUSF may generate an encrypted value called K_SEAF using the received CK and IK values.
- The UDM/ARPF/AUSF may transmit the generated K_SEAF to the SEAF.

Through the above-described process, the UE and the network may share a common encryption key K_SEAF.

The UE and the network may use the K_SEAF to derive additional encryption keys for lower layers not illustrated in the drawing. The newly derived keys may be encryption keys to be used in the 'UE and AMF' and/or the 'UE and gNB'. The derived keys may be keys for encryption purposes (i.e., encryption/decryption) and/or keys for integrity protection.

The encryption keys described above may have different security levels. For example, the encryption keys described above may have two different security levels. For example, an encryption key supporting a higher security level may have a longer key length, and an encryption key supporting a lower security level may have a shorter key length. For example, an encryption key supporting a higher security level may have key values suitable for a 256-bit encryption algorithm, and an encryption key supporting a lower security level may have key values suitable for a 128-bit encryption algorithm.

A SIM supporting a high security level may be able to simultaneously provide both a high-security-level encryption key and a low-security-level encryption key to the ME. A SIM supporting a low security level may be able to provide only low-security-level encryption keys to the ME.

An ME supporting a high security level may simultaneously support both high-security-level encryption algorithms using high-security-level encryption keys and low-security-level encryption algorithms using low-security-level encryption keys. An ME supporting a low security level may only support low-security-level encryption algorithms using low-security-level encryption keys.

A network supporting a high security level may simultaneously derive both a high-security-level encryption key and a low-security-level encryption key. Further, a network supporting a high security level may simultaneously support both high-security-level encryption algorithms that use high-security-level encryption keys and low-security-level encryption algorithms that use low-security-level encryption keys. A network supporting a low security level may only derive low-security-level encryption keys. Further, a network supporting a low security level may only support low-security-level encryption algorithms that use low-security-level encryption keys.

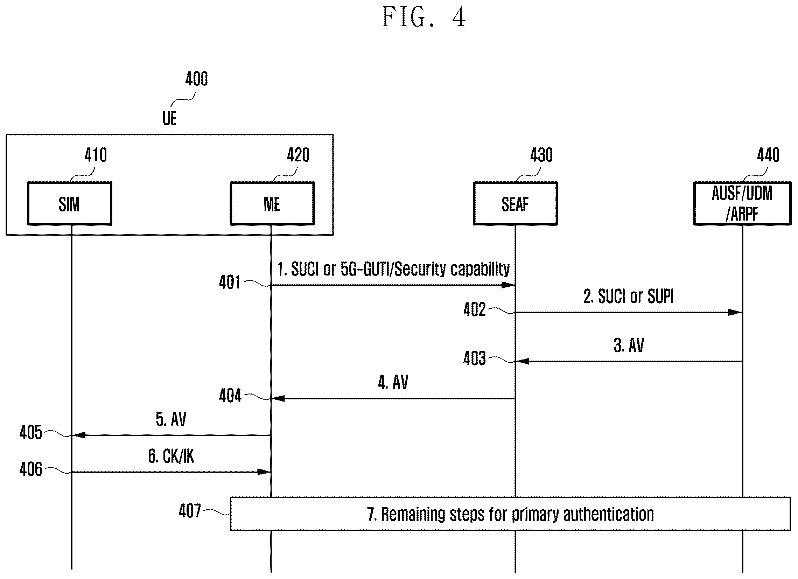

FIG. 4 is a message flow diagram illustrating an authentication process between a UE and a network, and a shared key generation process for secure communication according to an embodiment of the disclosure.

The above process is referred to as primary authentication, and through this process, the UE and the network may authenticate each other and share an encryption key to be used for secure communication between them. A detailed description of the encryption key to be used for the secure communication will be described with reference to FIG. 3.

A UE 400 illustrated in FIG. 4 may be composed of a SIM 410 and an ME 420. The network illustrated in FIG. 4 may be composed of a SEAF 430 and an AUSF/UDM/ARPF 440.

Hereinafter, each step to be performed in FIG. 4 will be individually described.

In step 401, the ME 420 may perform one or more of the following processes.
- The ME 420 may transmit information that may specify the UE to the SEAF 430. The above information may be a subscription concealed identifier (SUCI) or 5G-globally unique temporary identifier (GUTI).
- The ME 420 may transmit an encryption algorithm supported by the ME to the SEAF 430. The above information may be referred to as a security capability.

In step 402, the SEAF 430 may perform one or more of the following processes.
- The SEAF 430 may transmit information that may specify a UE that has requested authentication to the AUSF/UDM/ARPF 440. The above information may be a SUCI or subscription permanent identity (SUPI) corresponding to the UE.

In step 403, the AUSF/UDM/ARPF 440 may perform one or more of the following processes.
- The AUSF/UDM/ARPF 440 may specify the SIM that has requested authentication based on information received from the UE.
- The AUSF/UDM/ARPF 440 may identify a cryptographic root key possessed by the SIM that has requested authentication. The root key may be K described with reference to FIG. 3.
- The AUSF/UDM/ARPF 440 may transmit information necessary for authentication and shared key generation to the SEAF 430. The above information may be referred to as an AV. The AV may include the RAND value described with reference to FIG. 3.

In step 404, the SEAF 430 may perform one or more of the following processes.
- The SEAF 430 may transmit all or part of the AV value received in step 403 to the ME 420.
- The value transmitted above may include a RAND value.

In step 405, the ME 420 may perform one or more of the following processes.
- The ME 420 may transmit all or part of the AV value received in step 404 to the SIM 410.
- The value transmitted above may include a RAND value.

In step 406, the SIM 410 may perform one or more of the following processes.
- The SIM 410 may generate a cipher key (CK) and integrity key (IK) using the received RAND and the key K stored therein. A description of the CK and IK will be described with reference to FIG. 3.
- The SIM 410 may transmit the generated CK and IK to the ME 420.

In step 407, one or more of the following processes may be performed.
- The ME 420 may derive a K_SEAF using the CK and IK received in step 406. Further, the ME 420 may generate encryption and/or integrity protection keys to be used with the AMF and/or the gNB by using the derived K_SEAF.
- The AUSF/UDM/ARPF 440 may generate a K_SEAF and transmit it to the SEAF 430. The K_SEAF may be used for generating encryption and/or integrity protection keys that the AMF and/or the gNB will use for secure communication with the UE.

As described in the disclosure of FIG. 3, each entity constituting the UE and the network may support either a high security level or a low security level. However, in the case where the security levels of the entities differ, the primary authentication method illustrated in the figure (which is the method currently in use) may not operate properly. As an example, the following case is considered.
- SIM: Supports a high security level

ME: Supports a low security level
SEAF/AUSF/UDM/ARPF: Supports a high security level

In this case, the AUSF/UDM/ARPF 440, which specifies the SIM with the information received in step 402, will transmit an AV for generating a high-security level key to the SEAF 430 in step 403 based on the fact that the SIM supports a high security level. The AV is transmitted to the SIM 410 through steps 404 and 405, and in step 406, the SIM 410 may transmit the high-security level CK and IK to the ME 420. However, because the ME 420 supports a low security level, and the ME 420 supporting a low security level, as described with reference to FIG. 3 cannot apply a high-security-level encryption key, the authentication process cannot be performed normally.

The above example is merely one example, and various problems may occur in cases where the security levels of the three entities differ.

In the following description, several methods for solving these problems will be presented.

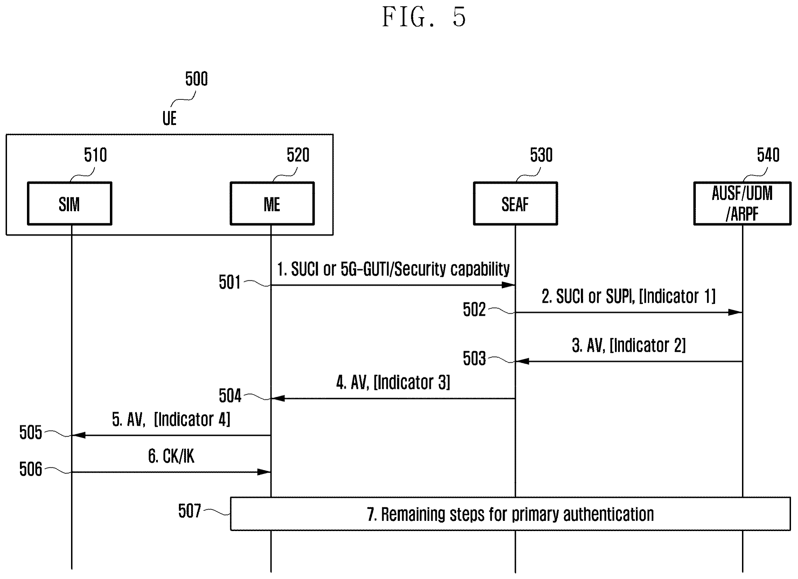

FIG. 5 is a message flow diagram illustrating an authentication process between a UE and a network that may have different security levels, and a shared key generation process for secure communication according to an embodiment of the disclosure.

The above process is an improved form of primary authentication, and through this process, the UE and the network may authenticate each other and share an encryption key to be used for secure communication between them. A detailed description of the encryption key to be used for secure communication will be described with reference to FIG. 3.

A UE 500 illustrated in FIG. 5 may be composed of a SIM 510 and an ME 520. The network illustrated in FIG. 5 may be composed of a SEAF 530 and an AUSF/UDM/ARPF 540. The SIM, ME, and SEAF may each support either a high or low security level. A detailed functional description of the SIM, ME, and SEAF supporting a high or low security level will be described with reference to FIGS. 3 and 4.

Hereinafter, each step to be performed in FIG. 5 will be individually described.

In step 501, the ME 520 may perform one or more of the following processes.
- The ME 520 may transmit information that may specify the UE to the SEAF 530. The above information may be a SUCI or 5G-GUTI.
- The ME 520 may transmit an encryption algorithm supported by the ME to the SEAF 530. The above information may be referred to as a security capability. In this case, an ME supporting a high security level may include an algorithm having a high security level.

In step 502, the SEAF 530 may perform one or more of the following processes.
- The SEAF 530 may transmit information that may specify the UE has requested authentication to the AUSF/UDM/ARPF 540. The above information may be a SUCI or SUPI corresponding to the UE.

In this case, if the SEAF 530 supports a high security level, the following process may be additionally performed.
- The SEAF 530 may transmit information (indicated as indicator 1 in the drawing) notifying that the algorithm supported by the ME 520 received in step 501 includes an algorithm having a high security level to the AUSF/UDM/ARPF 540. The above information may be included as a parameter of a message transmitted by the SEAF 530 to the AUSF/UDM/ARPF 540 in step 502.

In step 503, the AUSF/UDM/ARPF 540 may perform one or more of the following processes.
- The AUSF/UDM/ARPF 540 may specify the SIM that has requested authentication based on information received from the UE.
- The AUSF/UDM/ARPF 540 may identify a cryptographic root key possessed by the SIM that has requested authentication. The root key may be K described with reference to FIG. 3.
- The AUSF/UDM/ARPF 540 may transmit information necessary for authentication and shared key generation to the SEAF 530. The above information may be referred to as an AV. The AV may include the RAND value described with reference to FIG. 3.
- If the SIM is identified as supporting a high security level and an indicator 1 is received in step 502, the AUSF/UDM/ARPF 540 may generate an AV including information necessary for deriving a high-security-level encryption key.
- If the AV is composed of information necessary for deriving an high-security-level encryption key, the AUSF/UDM/ARPF 540 may transmit information notifying this fact (indicated as indicator 2 in the drawing) to the SEAF 530. The above information may be included as a parameter of the message transmitted by the AUSF/UDM/ARPF 540 in step 503.

In step 504, the SEAF 530 may perform one or more of the following processes.
- The SEAF 530 may transmit all or part of the AV value received in step 503 to the ME 520.
- The value transmitted above may include a RAND value.

In this case, if the SEAF 530 supports a high security level, the following process may be additionally performed.
- If the SEAF 530 receives an indicator 2 in step 503, the SEAF 530 may transmit information (indicated as indicator 3 in the drawing) notifying the ME 520 of this fact. The above information may be included as a parameter of the message transmitted by the SEAF 530 in step 504.

In step 505, the ME 520 may perform one or more of the following processes.
- The ME 520 may transmit all or part of the AV value received in step 504 to the SIM 510.
- The value transmitted above may include a RAND value.

In this case, if the ME 520 supports a high security level, the following process may be additionally performed.
- If the ME 520 receives an indicator 3 in step 504, the ME 520 may transmit information (indicated as indicator 4 in the drawing) notifying the SIM 510 of this fact. The above information may be included as a parameter of the message transmitted by the ME 520 in step 505.

In step 506, the SIM 510 may perform one or more of the following processes.
- The SIM 510 may generate a CK and IK using the received RAND and the key K stored therein. A description of the CK and IK will be described with reference to FIG. 3.
- The SIM 510 may transmit the generated CK and IK to the ME 520.

In this case, if the SIM 510 supports a high security level, the following process may be additionally performed.
- If the SIM 510 receives an indicator 4 in step 505, the SIM 510 may transmit a CK and IK with a high security level to the ME 520. If the SIM 510 does not receive an indicator 4 in step 505, the SIM 510 may transmit a CK and IK with a low security level to the ME 520.

In step 507, one or more of the following processes may be performed.
- The ME 520 may derive a K_SEAF using the CK and IK received in step 506. Further, the ME 520 may generate encryption and/or integrity protection keys to be used with the AMF and/or the gNB by using the derived K_SEAF.
- The AUSF/UDM/ARPF 540 may generate a K_SEAF and transmit it to the SEAF 530. The K_SEAF may be used for generating encryption and/or integrity protection keys that the AMF and/or the gNB will use for secure communication with the UE.

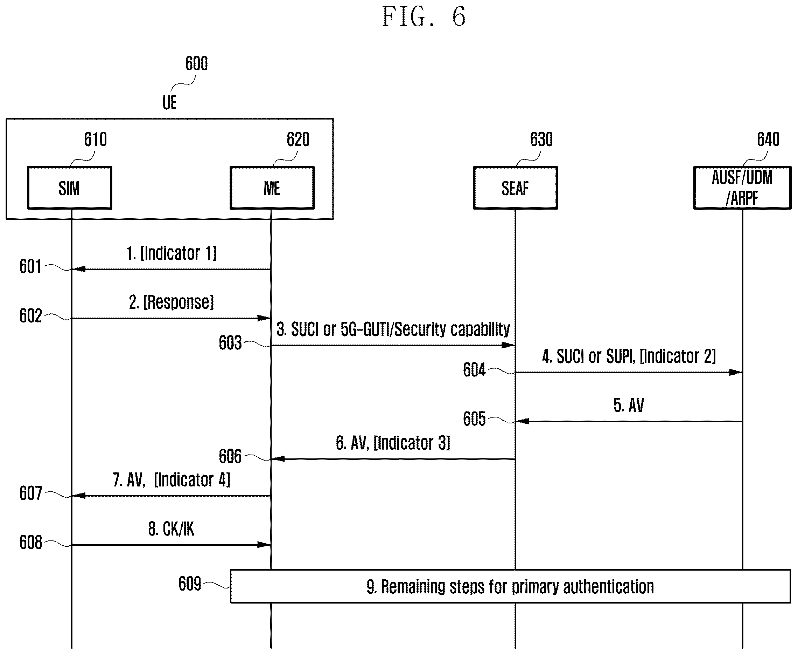

FIG. 6 is a message flow diagram illustrating an authentication process between a UE and a network that may have different security levels, and a shared key generation process for secure communication according to another embodiment of the disclosure.

The above process is an improved form of primary authentication, and through this process, the UE and the network may authenticate each other and share an encryption key to be used for secure communication between them. A detailed description of the encryption key to be used for secure communication will be described with reference to FIG. 3.

A UE 600 illustrated in FIG. 6 may be composed of a SIM 610 and an ME 620. The network illustrated in FIG. 6 may be composed of a SEAF 630 and an AUSF/UDM/ARPF 640. The SIM, ME, and SEAF may each support either a high or low security level. A detailed functional description of the SIM, ME, and SEAF supporting a high or low security level will be described with reference to FIGS. 3 and 4.

Hereinafter, each step to be performed in FIG. 6 will be individually described.

In step 601, if the ME 620 supports a high security level, one or more of the following processes may be performed.
- The ME 620 may transmit information (indicated as indicator 1 in the drawing) to the SIM 610 to inquire whether the SIM supports a high security level.

In step 602, if the SIM 610 supports a high security level, one or more of the following processes may be performed.
- If the indicator 1 is received in step 601, the SIM 610 may transmit information (indicated as response in the drawing) to the ME 620 that it supports a high security level.

In step 603, the ME 620 may perform one or more of the following processes.
- The ME 620 may transmit information that may specify the UE to the SEAF 630. The above information may be a SUCI or 5G-GUTI.
- The ME 620 may transmit an encryption algorithm supported by the ME to the SEAF 630. The above information may be referred to as a security capability.

In this case, if the SEAF 630 supports a high security level, the following process may be additionally performed.
- If the indicator 1 is received in step 602, the ME 620 may include an algorithm having a high security level and transmit it to the SEAF 630. If the indicator 1 is not received in step 602, the ME 620 may transmit only an algorithm having a low security level to the SEAF 630.

In step 604, the SEAF 630 may perform one or more of the following processes.
- The SEAF 630 may transmit information that may specify the UE that has requested authentication to the AUSF/UDM/ARPF 640. The above information may be a SUCI or SUPI corresponding to the UE.

In this case, if the SEAF 630 supports a high security level, the following process may be additionally performed.
- If the algorithm supported by the ME 620 received in step 603 includes an algorithm having a high security level, the SEAF 630 may transmit information (indicated as indicator 2 in the drawing) notifying this fact to the AUSF/UDM/ARPF 640. The above information may be included as a parameter in a message transmitted by the SEAF 630 to the AUSF/UDM/ARPF 640 in step 604.

In step 605, the AUSF/UDM/ARPF 640 may perform one or more of the following processes.
- The AUSF/UDM/ARPF 640 may specify the SIM that has requested authentication based on information received from the UE.
- The AUSF/UDM/ARPF 640 may identify a cryptographic root key possessed by the SIM that has requested authentication. The root key may be K described with reference to FIG. 3.
- The AUSF/UDM/ARPF 640 may transmit information necessary for authentication and shared key generation to the SEAF 630. Such information may be referred to as an AV. The AV may include the RAND value described with reference to FIG. 3.
- If the indicator 2 is received in step 604, the AUSF/UDM/ARPF 640 may generate an AV including information necessary for deriving a high-security-level encryption key.

In step 606, the SEAF 630 may perform one or more of the following processes.
- The SEAF 630 may transmit all or part of the AV value received in step 605 to ME 620.
- The value transmitted above may include a RAND value.

In this case, if the SEAF 630 supports a high security level, the following process may be additionally performed.
- The SEAF 630 may transmit information (indicated as indicator 3 in the drawing) notifying that it also supports a high security level if the algorithm supported by the ME received in step 603 includes an algorithm having a high security level. The above information may be included as a parameter of the message transmitted by the SEAF 630 in step 606.

In step 607, the ME 620 may perform one or more of the following processes.
- The ME 620 may transmit all or part of the AV value received in step 606 to the SIM 610.
- The value transmitted above may include a RAND value.

In this case, if the ME 620 supports a high security level, the following process may be additionally performed.
- If the ME 620 receives the indicator 3 in step 606, the ME 620 may transmit information (indicated as indicator 4 in the drawing) notifying the SIM 610 of this fact. The above information may be included as a parameter of a message transmitted by the ME 620 in step 607.

In step 608, the SIM 610 may perform one or more of the following processes.
- The SIM 610 may generate a CK and IK using the received RAND and the key K stored therein. A description of the CK and IK will be described with reference to FIG. 3.
- The SIM 610 may transmit the generated CK and IK to the ME 620.

In this case, if the SIM 610 supports a high security level, the following process may be additionally performed.
- If the SIM 610 receives the indicator 4 in step 607, the SIM 610 may transmit a CK and IK having a high security level to the ME 620. If the SIM 610 does not receive the indicator 4 in step 707, the SIM 610 may transmit a CK and IK having a low security level to the ME 620.

In step 609, one or more of the following processes may be performed.
- The ME 620 may derive a K_SEAF using the CK and IK received in step 608. Further, the ME 620 may generate encryption and/or integrity protection keys to be used with the AMF and/or the gNB by using the derived K_SEAF.
- The AUSF/UDM/ARPF 640 may generate a K_SEAF and transmit it to the SEAF 630. The K_SEAF may be used for generating encryption and/or integrity protection keys that the AMF and/or the gNB will use for secure communication with the UE.

It should be noted that the constitution diagrams, exemplary diagrams of control/data signal transmission and reception methods, and exemplary diagrams of operational procedures illustrated in FIGS. 1A to 6 are not intended to limit the scope of the embodiments of the disclosure. That is, not all components, entities, or operational steps described with reference to FIGS. 1A to 6 should be construed as essential components for implementing the disclosure, and the disclosure may be implemented within a scope that does not depart from the spirit of the disclosure even if only some components are included.

The operations of the embodiments described above may be implemented by providing a memory device that stores the corresponding program code in any component within the device. That is, a controller of the device may perform the above-described operations by reading and executing the program codes stored in the memory device through a processor or a central processing unit (CPU).

Various components and modules of the entities or UE devices described in the disclosure may be operated using hardware circuits, such as logic circuits based on complementary metal oxide semiconductors (CMOS), firmware, software, and/or a combination of hardware, firmware, and software embedded in a machine-readable medium. For example, various electrical structures and methods may be implemented using electrical circuits such as transistors, logic gates, and application-specific integrated circuits (ASICs).

Methods according to the embodiments described in the claims or specifications of the disclosure may be implemented in the form of hardware, software, or a combination of hardware and software.

In the case of being implemented in software, a computer readable storage medium storing one or more programs (software modules) may be provided. One or more programs stored in the computer readable storage medium are configured for execution by one or more processors in an electronic device. The one or more programs include instructions for causing the electronic device to execute methods according to embodiments described in a claim or specification of the disclosure.

Such programs (software modules, software) may be stored in a random access memory, a non-volatile memory including a flash memory, a read only memory (ROM), an electrically erasable programmable ROM (EEPROM), a magnetic disc storage device, a compact disc-ROM (CD-ROM), digital versatile discs (DVDs), another form of optical storage device, or a magnetic cassette. Alternatively, the programs may be stored in a memory composed of a combination of some or all thereof. Further, each constitution memory may be included in the plural.

Further, the program may be stored in an attachable storage device that may access through a communication network such as the Internet, Intranet, local area network (LAN), wide area network (WAN), or storage area network (SAN), or a communication network composed of a combination thereof. Such a storage device may access a device implementing an embodiment of the disclosure through an external port. Further, a separate storage device on a communication network may access a device implementing the embodiment of the disclosure.

In the specific embodiments of the disclosure described above, elements included in the disclosure were expressed in the singular or plural according to the presented specific embodiments. However, the singular or plural expression is appropriately selected for a situation presented for convenience of description, and the disclosure is not limited to the singular or plural component, and even if a component is represented in the plural, it may be composed of the singular, or even if a component is represented in the singular, it may be composed of the plural.

In the detailed description of the disclosure, although specific embodiments have been described, various modifications are possible without departing from the scope of the disclosure. Therefore, the scope of the disclosure should not be limited to the described embodiments, but should be defined by the following claims and their equivalents.

## Claims

1. A method performed by a first network entity in a wireless communication system, the method comprising:
receiving, from a user equipment (UE), first information on specifying the UE; and
transmitting, to a second network entity, second information related to algorithms supported by the UE and the first network entity based on the first information on specifying the UE,
wherein the second information is related to notify that the algorithms supported by the UE and the first network entity include an algorithm with a high security level.

2. The method of claim 1, wherein the first information is associated with an encryption algorithm supported by the UE.

3. The method of claim 1, further comprising:
receiving, from the second network entity, third information on deriving a high-security-level encryption key related to an authentication and a shared key generation.

4. The method of claim 3, further comprising:
transmitting, in the case that the third information is received, to the UE, all or part of the third information,
wherein the UE comprises a subscriber identity module (SIM) and a mobile equipment (ME), and
wherein the all or part of the third information is transmitted from the ME to the SIM.

5. A method performed by a second network entity in a wireless communication system, the method comprising:
receiving, from a first network entity, second information related to algorithms supported by a user equipment (UE) and the first network entity based on first information on specifying the UE,
wherein the first information on specifying the UE is transmitted from the UE to the first network entity, and
wherein the second information is related to notify that the algorithms supported by the UE and the first network entity include an algorithm with a high security level.

6. The method of claim 5, wherein the first information is associated with an encryption algorithm supported by the UE.

7. The method of claim 5, further comprising:
transmitting, to the first network entity, third information on deriving a high-security-level encryption key related to an authentication and a shared key generation.

8. The method of claim 7, wherein, in the case that the third information is transmitted, all or part of the third information is transmitted from the first network entity to the UE,
wherein the UE comprises a subscriber identity module (SIM) and a mobile equipment (ME), and
wherein the all or part of the third information is transmitted from the ME to the SIM.

9. A first network entity in a wireless communication system, the first network entity comprising:
a transceiver capable of transmitting and receiving at least one signal; and
a controller coupled with the transceiver,
wherein the controller is configured to:
receive, from a user equipment (UE), first information on specifying the UE, and
transmit, to a second network entity, second information related to algorithms supported by the UE and the first network entity based on the first information on specifying the UE, and
wherein the second information is related to notify that the algorithms supported by the UE and the first network entity include an algorithm with a high security level.

10. The first network entity of claim 9, wherein the first information is associated with an encryption algorithm supported by the UE.

11. The first network entity of claim 9, wherein the controller is further configured to receive, from the second network entity, third information on deriving a high-security-level encryption key related to an authentication and a shared key generation.

12. The first network entity of claim 11,
wherein, in the case that the third information is received, the controller is further configured to transmit all or part of the third information to the UE,
wherein the UE comprises a subscriber identity module (SIM) and a mobile equipment (ME), and
wherein the all or part of the third information is transmitted from the ME to the SIM.

13. A second network entity in a wireless communication system, the second network entity comprising:
a transceiver capable of transmitting and receiving at least one signal; and
a controller coupled with the transceiver,
wherein the controller is configured to receive, from a first network entity, second information related to algorithms supported by a user equipment (UE) and the first network entity based on first information on specifying the UE,
wherein the first information on specifying the UE is transmitted from the UE to the first network entity, and
wherein the second information is related to notify that the algorithms supported by the UE and the first network entity include an algorithm with a high security level.

14. The second network entity of claim 13, wherein the first information is associated with an encryption algorithm supported by the UE.

15. The second network entity of claim 14,
wherein the controller is further configured to transmit, to the first network entity, third information on deriving a high-security-level encryption key related to an authentication and a shared key generation,
wherein in the case that the third information is transmitted, all or part of the third information is transmitted from the first network entity to the UE,
wherein the UE comprises a subscriber identity module (SIM) and a mobile equipment (ME), and
wherein the all or part of the third information is transmitted from the ME to the SIM.
